# FASCICULE DE BREVET EUROPEEN

(11) **EP 2 711 686 B1**
(45) Date de publication et mention de la délivrance du brevet: **19.06.2024**
(21) Numéro de dépôt: 13185204.8
(22) Date de dépôt: 19.09.2013
(51) Int. Cl.: G01N 21/31, G01N 21/359

(54) **Détecteur optique d'un gaz**
Optischer Detektor eines Gases
Optical gas detector

(30) Priorité: 20.09.2012 FR 1258833
(43) Date de publication de la demande: 26.03.2014
(73) Titulaire: COMMISSARIAT À L'ÉNERGIE ATOMIQUE ET AUX ÉNERGIES ALTERNATIVES, 75015 Paris (FR)
(72) Inventeur: Gidon, Serge, 38140 LA MURETTE (FR); Gidon, Pierre, 38130 ECHIROLLES (FR)
(74) Mandataire: Cabinet Beaumont

(56) Documents cités:
- DE-A1-102010 008 091
- US-A- 4 088 407
- US-A- 5 401 966
- US-B1- 7 119 337

## Description

### Domaine de l'invention

La présente invention concerne un détecteur optique de présence, et éventuellement de teneur, d'un gaz dans une atmosphère.

### État de la technique

Il est connu d'utiliser des détecteurs optiques de présence d'un gaz, par exemple de dioxyde de carbone CO₂, de monoxyde de carbone CO, de méthane ou éventuellement de divers gaz toxiques tels que du xylène ou du toluène dégagés par les peintures. Il est à noter qu'un détecteur de présence d'un excès de CO₂ peut constituer un détecteur d'incendie.

On s'intéressera ici à des détecteurs optiques qui détectent la présence d'un gaz en mesurant l'absorption d'un faisceau lumineux à une ou plusieurs longueurs d'onde correspondant à une ou plusieurs raies d'absorption du gaz considéré. Dans de tels détecteurs, un faisceau optique est émis par une source lumineuse émettant dans une plage de longueurs d'onde incluant la ou les longueurs d'onde de raies d'absorption caractéristiques du gaz à détecter. Un récepteur précédé d'un filtre à la longueur d'onde de la raie d'absorption à détecter indique l'absorption à cette longueur d'onde, et on peut en déduire la présence et la teneur du gaz considéré. Pour que de tels détecteurs fonctionnent de façon satisfaisante, on prévoit généralement deux récepteurs, ou deux zones de réception, le deuxième récepteur étant destiné à fournir une indication de référence à des longueurs d'onde autres que la longueur d'onde de la raie d'absorption. Cette référence sert notamment à tenir compte de fluctuations environnementales (par exemple l'humidité de l'air), de fluctuations d'intensité de la source d'émission et/ou de la sensibilité de la chaîne de détection.

Pour que l'ensemble du système détecteur de gaz ait un encombrement réduit, on prévoit souvent que le faisceau lumineux se propageant entre l'émetteur et le récepteur fasse un ou plusieurs trajets en aller-retour par l'intermédiaire de systèmes réflecteurs. On prévoit par exemple que des faisceaux lasers subissent des réflexions multiples dans une cavité résonante dans laquelle le gaz à détecter est susceptible d'être présent.

De façon générale, les systèmes détecteurs de gaz existants impliquant au moins un aller-retour de faisceaux lumineux entre l'émetteur et le récepteur présentent l'inconvénient d'être relativement délicats à fabriquer. En effet, ils nécessitent un positionnement précis de l'émetteur et du récepteur par rapport aux systèmes réflecteurs déterminant le trajet optique entre l'émetteur et le récepteur.

Ainsi, il existe un besoin pour un détecteur optique de gaz par absorption qui soit particulièrement simple à fabriquer et qui soit tolérant à des défauts d'alignement entre l'émetteur, les surfaces réflectrices et le récepteur.

Le document DE 10 2010 0089091 décrit un montage optique.

Le document US 4 088 407 décrit une cuvette pour analyse chromatographique liquide.

Le document US 7 119 337 décrit des sources de rayonnement infrarouge, des capteurs et des combinaisons de sources, et leurs procédés de fabrication.

Le document US 5 401 966 décrit un montage à capteur spectrophotométrique comprenant un micro lampe.

### Résumé

Un mode de réalisation prévoit un dispositif palliant au moins certains des inconvénients des dispositifs existants.

Pour cela, un mode de réalisation de la présente invention prévoit un détecteur de gaz selon la revendication 1.

Selon un mode de réalisation de la présente invention, les deux calottes hémisphériques sont assemblées en une sphère.

Selon un mode de réalisation de la présente invention, les deux calottes hémisphériques sont écartées l'une de l'autre par une bague annulaire.

Selon un mode de réalisation de la présente invention, le récepteur de lumière comprend au moins deux parties détectant des longueurs d'onde différentes.

Selon un mode de réalisation de la présente invention, la plaquette repose sur une languette en appui sur au moins un bord des calottes, la languette étant située dans le plan équatorial des calottes.

Selon un mode de réalisation de la présente invention, la languette est en un matériau transparent aux longueurs d'onde que le détecteur de gaz vise à détecter.

Selon un mode de réalisation de la présente invention, l'émetteur et le récepteur de lumière sont formés dans des parties de plaques accolées par leur face arrière.

Selon un mode de réalisation de la présente invention, la partie réflectrice des deux calottes hémisphériques est située à une latitude supérieure à 60° par rapport au plan équatorial.

Selon un mode de réalisation de la présente invention, l'ensemble émetteur-récepteur est placé à une distance du centre du plan équatorial comprise entre 5 et 10 % du rayon des calottes hémisphériques.

Un mode de réalisation de la présente invention prévoit en outre un détecteur imageur, comprenant un détecteur de gaz tel que décrit ci-dessus, un imageur étant en outre formé sur la languette.

Selon un mode de réalisation de la présente invention, l'imageur est un imageur infrarouge.

Selon un mode de réalisation de la présente invention, le détecteur imageur comprend un support à plusieurs bras de maintien venant serrer les calottes hémisphériques et assurant l'orientation des calottes.

### Brève description des dessins

Ces objets, caractéristiques et avantages, ainsi que d'autres seront exposés en détail dans la description suivante de modes de réalisation particuliers faite à titre non limitatif en relation avec les figures jointes parmi lesquelles :
la figure 1 est une vue en coupe d'un mode de réalisation d'un détecteur optique de gaz tolérant à des défauts d'alignement ;
la figure 2A est une vue en coupe à un stade intermédiaire d'assemblage d'un mode de réalisation d'un ensemble émetteur-récepteur-filtre ;
la figure 2B est une vue de dessus partielle d'un mode de réalisation d'un élément de l'ensemble de la figure 2A ;
la figure 2C est une vue en coupe d'une variante de réalisation d'un ensemble émetteur-récepteur-filtre ; et
la figure 3 est une vue en perspective d'un mode de réalisation d'un détecteur optique de gaz par absorption.

### Description détaillée

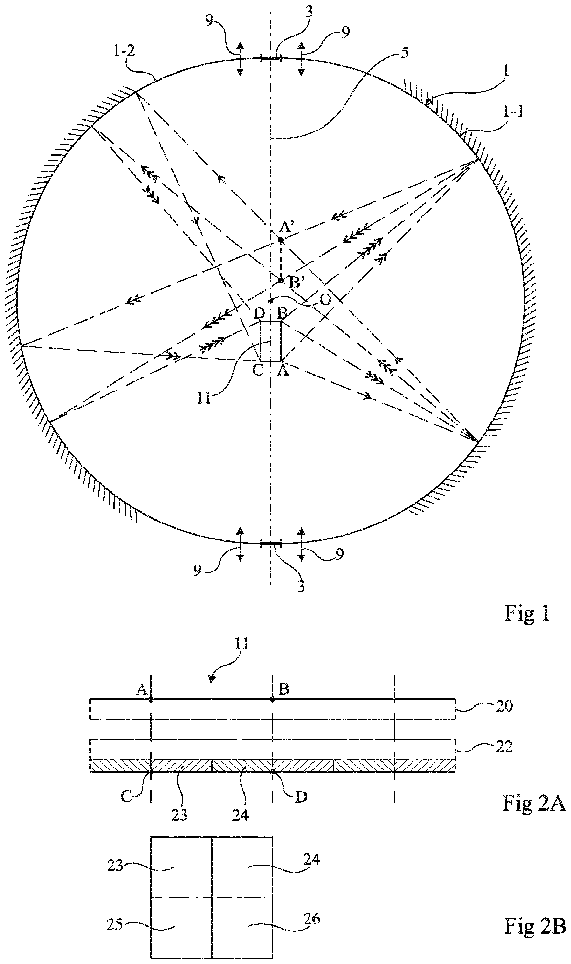

La figure 1 est une vue en coupe présentant un mode de réalisation d'un détecteur de gaz par absorption selon un mode de réalisation.

Le détecteur comprend une structure sphérique creuse 1, par exemple d'une taille comprise entre la taille d'une balle de ping-pong et la taille d'une balle de tennis (diamètre de préférence inférieur à 10 cm). Les parois internes de cette sphère sont réflectrices pour une longueur d'onde d'intérêt ou une gamme de longueurs d'onde d'intérêt. Bien que l'on ait mentionné ci-dessus et que l'on mentionnera ci-après une structure sphérique, on notera que la structure peut être approximativement sphérique. Par exemple, comme cela est représenté en figure 1, deux calottes hémisphériques 1-1, 1-2 peuvent être assemblées avec leurs concavités en regard par l'intermédiaire d'une bague 3 maintenant un léger espacement entre les deux calottes hémisphériques. La bague 3 n'est pas nécessairement un élément matériel distinct de chacune des deux calottes hémisphériques mais peut être simplement un moyen d'assemblage de ces deux calottes hémisphériques, tel que généralement utilisé dans la fabrication des balles de ping-pong.

Un ensemble émetteur-récepteur 11 est disposé sur un plan équatorial 5 à l'intérieur de la sphère (plan équatorial réel dans le cas d'une structure sphérique, plan orthogonal au milieu de la bague 3 dans le cas où deux calottes sont espacées par une bague 3). L'ensemble émetteur-récepteur 11 est représenté sous forme d'une petite plaquette ayant une face émettrice AB tournée vers l'une des calottes hémisphériques 1-1 et une face réceptrice CD tournée vers la calotte hémisphérique opposée 1-2.

L'émetteur-récepteur est disposé dans le plan équatorial et est décalé dans ce plan par rapport au centre O de la sphère. L'émetteur est de préférence un émetteur non directionnel ou peu directionnel (émetteur divergent) tel qu'un filament chauffé. On voit par les tracés de rayons extrêmes indiqués en figure 1 que la calotte hémisphérique 1-1 fournit de la face AB de l'émetteur une image symétrique dans le plan équatorial A'B' et que la calotte hémisphérique 1-2 renvoie l'image A'B' sur la face réceptrice CD de l'émetteur-récepteur 11.

Des simulations effectuées par les inventeurs montrent qu'un tel système est pratiquement insensible à des déréglages dans certaines plages d'écart. En effet, si l'ensemble émetteur-récepteur 11 est décalé dans le plan équatorial d'une valeur de 5 à 10 % du rayon R des calottes hémisphériques, l'intensité lumineuse reçue par le côté récepteur CD du dispositif 11 varie de moins de 10 %. De même, si le système émetteur-récepteur 11 est décalé orthogonalement au plan équatorial, d'une valeur de 5 à 10 % du rayon des calottes hémisphériques, cela entraîne une variation de l'intensité reçue également inférieure à 10 %.

Cette importante tolérance de positionnement est notamment liée au fait que la partie émettrice, côté AB, et la partie réceptrice, côté CD, de l'ensemble émetteur-récepteur 11 sont accolées tête-bêche en un bloc unique, d'où il résulte que l'émetteur et le ou les récepteurs se déplacent ensemble et que ce déplacement simultané compense les conséquences d'éventuelles erreurs de positionnement.

Par ailleurs, la sphère comprend de préférence, du côté de l'intersection entre cette sphère et le plan équatorial 5, une ou plusieurs ouvertures 9 destinées à assurer la circulation du gaz ambiant de l'environnement dans lequel la sphère est placée.

La figure 2A illustre, à titre d'exemple, une étape de fabrication d'un exemple de réalisation d'un ensemble émetteur-récepteur 11. De nombreux émetteurs sont formés sur une première plaque 20, par exemple une plaque de silicium, éventuellement montée sur une plaque en un matériau isolant tel que de la silice ou du saphir. L'émetteur ne sera pas décrit en détail car sa technologie de fabrication est bien connue. Il peut s'agir d'un filament de platine ou de nitrure de titane formé sur la plaque par tout moyen connu. En fonctionnement, ce filament est chauffé par le passage du courant électrique à une température supérieure à 200°C propre à fournir une quantité de rayonnement suffisante dans une plage de longueurs d'onde contenant la raie d'absorption à détecter, par exemple à 650°C pour une longueur d'onde centrale de 4,25 um dans le cas où le gaz à détecter est du CO₂. Avantageusement, une telle température est compatible avec une durée de vie élevée du filament.

Les récepteurs du côté CD du dispositif 11 sont formés sur une deuxième plaque 22 également par tout moyen connu. La deuxième plaque est de préférence une plaque de silicium dans laquelle sont intégrés des composants passifs (résistances, capacités, capacités ferro-électriques...) ou actifs (diodes ou transistors) dont des caractéristiques se modifient en fonction de leur échauffement à la réception de rayons infrarouges. Notamment, les récepteurs peuvent être des capteurs bolo-métriques, constitués par exemple d'une membrane qui absorbe les rayons infrarouges et s'échauffe, la hausse de température de la membrane impliquant une variation de sa résistance détectable.

Chaque récepteur CD peut être revêtu d'au moins un filtre. Deux filtres 23, 24 sont visibles dans la vue en coupe de la figure 2A, respectivement centrés sur la raie d'absorption à détecter et sur une deuxième longueur d'onde. Cette deuxième longueur d'onde peut permettre la détection d'un autre gaz, voire par exemple traiter la voie de référence. Ces filtres peuvent correspondre à des empilements de couches minces diélectriques. Il peut aussi s'agir d'une alternance de bandes métalliques et isolantes dont le pas et l'espacement déterminent la fréquence de filtrage.

Ensuite, les plaques 20 et 22 sont accolées l'une à l'autre de sorte que les faces AB et CD constituent des faces externes opposées, et découpées en plaquettes élémentaires, correspondant chacune à un ensemble émetteur-récepteur, selon les lignes de découpe illustrées en pointillés verticaux en figure 2A. Avantageusement, des systèmes complets comprenant une source, un ou plusieurs filtres, et un ou plusieurs récepteurs, sont formés collectivement sur une plaquette, puis découpés en systèmes individuels. Cette production collective des systèmes complets assure un faible coût de fabrication.

La vue de dessous de la figure 2B représente un cas où l'on a prévu côté récepteur quatre filtres 23, 24, 25, 26 destinés par exemple à recevoir respectivement une longueur d'onde ou une plage de longueurs d'onde de référence et trois longueurs d'onde particulières, correspondant par exemple à trois raies d'absorption d'un même gaz à détecter ou à des raies d'absorption de plusieurs gaz à détecter. Chaque filtre est associé à un récepteur, par exemple de type bolométrique. La plaquette 11 fait par exemple de 1 à 5 mm de côté et de 1 à 2 mm d'épaisseur.

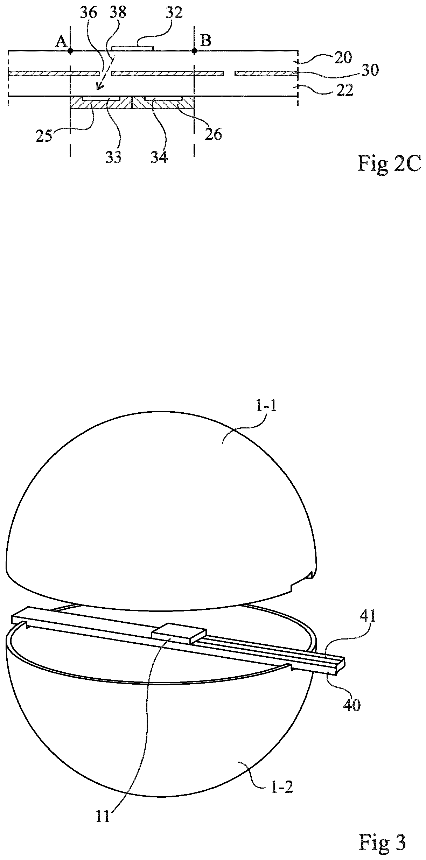

La figure 2C est une vue en coupe d'une variante de réalisation d'un ensemble émetteur-récepteur-filtre. Dans certains cas, les plaques 20, 22 sont transparentes aux longueurs d'onde concernées. C'est le cas par exemple de plaques de silicium aux longueurs d'onde voisines de 4,25 um. Dans ce cas on place, entre l'émetteur et le ou les récepteurs, une couche faisant barrière à la transmission de rayonnements directs à travers les plaques. On pourra par exemple placer, comme cela est représenté, une couche 30 opaque aux rayonnements, par exemple une couche métallique, formée sur l'une au moins des deux plaques avant leur assemblage.

Dans la représentation de la figure 2C, on a symbolisé par un rectangle 32 la zone d'émetteur sur la face AB de la plaque supérieure et par des rectangles 33, 34 deux zones de récepteur sur la face CD de la plaque inférieure, respectivement recouvertes de filtres 25, 26. La couche opaque 30 comporte, dans une variante de réalisation, une ouverture 36 pour laisser passer un rayonnement direct 38 de l'émetteur 32 vers le récepteur 33. Dans cette variante, le "filtre" 25 recouvrant le récepteur 33 est alors opaque. Le récepteur 33 fournit alors un signal de référence représentatif des seules fluctuations de l'émetteur 32.

La figure 3 est une vue en perspective représentant un exemple de montage du bloc émetteur-récepteur 11 à l'intérieur d'une sphère à parois intérieures au moins en partie réflectrices. La plaquette 11 est montée sur une languette 40 sur laquelle ont été implantées des pistes métalliques 41 destinées à assurer les connexions vers l'émetteur et le ou les récepteurs. La languette peut être en un matériau transparent dans la plage de longueurs d'onde à détecter, par exemple en silicium ou en saphir, ces matériaux étant sensiblement transparents à une longueur d'onde de 4,25 um. On pourra prévoir également que la languette comprend, en regard de la plaquette, une ouverture destinée à laisser le passage aux rayons lumineux (l'image A'B' en figure 1).

Dans l'exemple représenté, qui n'est pas limitatif, la languette 40 repose en appui sur au moins un bord des calottes hémisphériques 1-1, 1-2. Une encoche peut être définie à partir de ce bord pour aider à l'alignement.

On comprendra que la présente invention est susceptible de nombreuses variantes tant en ce qui concerne le nombre d'émetteurs optiques, le nombre de récepteurs optiques et de filtres associés, ainsi que la nature de ces émetteurs et récepteurs et la réalisation de l'assemblage tête-bêche d'un émetteur et de récepteurs.

De plus, comme cela a été représenté en figure 1 par des hachures latérales, seule une partie de l'intérieur de la sphère peut également être rendue réflectrice. En pratique, on pourra prévoir une métallisation des parois des calottes hémisphériques pour les rendre réfléchissantes, voire un dépôt d'un empilement de couches diélectriques spécifiques. En ce qui concerne la métallisation, elle pourra être réalisée seulement sur un tronçon de leurs surfaces, situé par exemple à des latitudes supérieures à 60° si on se réfère au plan équatorial. Cela permet de limiter la perte de rayons qui seraient réfléchis sous trop forte incidence.

En outre, le dépôt métallique permettant de rendre réflectrices les faces intérieures des calottes hémisphériques peut être réalisé de sorte que la surface réflectrice soit légèrement rugueuse (et diffusante) pour rendre floue l'image du filament sur le récepteur afin d'augmenter encore la tolérance aux imperfections de fabrication.

Selon une variante de réalisation, d'autres fonctions pourront être intégrées dans la sphère, en combinaison ou indépendamment de la fonction de détecteur de gaz.

Notamment, il pourra être prévu d'intégrer un imageur sur la languette 40, par exemple formé en circuit intégré. Cet imageur pourra être un imageur infrarouge, sensible à des longueurs d'onde non stoppées par le matériau réflecteur déposé sur les parois des calottes hémisphériques. Un tel imageur pourra être utilisé pour réaliser une détection de position ou de mouvement de personnes dans la pièce où est placée la sphère.

Dans cet exemple de réalisation, le matériau réflecteur déposé sur les parois des calottes hémisphériques sera prévu pour être réflecteur à la ou les longueurs d'onde de détection de gaz, et pour être transmissif à la longueur d'onde d'observation de l'imageur. A titre d'exemple, si le gaz détecté est du CO₂ et que l'imageur est prévu pour acquérir des images dans l'infrarouge, le matériau déposé sur les faces intérieures des calottes hémisphériques peut être une couche de silicium présentant une épaisseur optique de l'ordre de 2,1 um. En effet, une telle épaisseur est sensiblement égale à λ₁/2 pour la longueur d'onde d'absorption λ₁ du CO₂, c'est-à-dire qu'elle forme une couche réflectrice et est égale à λ₂/4 pour une longueur d'onde infrarouge λ₂ valant 10 um, c'est-à-dire transmissive.

On définit ainsi un système comprenant un détecteur de CO₂ présentant une raie d'absorption à environ 4,25 um, et un imageur infrarouge pour des longueurs d'onde dans la bande 8-12 µm, ce qui correspond à l'émission infrarouge du corps humain.

Comme nous l'avons vu précédemment, le matériau déposé sur les parois des calottes peut être un empilement de plusieurs couches, par exemple de deux couches de silicium séparées par une couche d'un matériau d'indice optique faible, tel que du sulfure de zinc (ZnS), du nitrure de silicium SiN ou de l'oxyde de silicium SiO₂.

Le positionnement de l'imageur sera prévu de façon à ne pas gêner les rayons réfléchis dans la boule pour la détection de gaz. Pour cela, l'imageur pourra par exemple être placé sur la languette 40 en dehors des zones ABCD et A'B'C'D', voire hors du plan de coupe de la figure 1.

En outre, la forme sphérique (ou quasi-sphérique) du détecteur de gaz proposé ici est particulièrement adaptée à l'intégration de l'imageur dans une pièce, la structure sphérique étant maintenue par un dispositif mécanique dans une position par exemple fixe par rapport à un mur ou un plafond d'une pièce. On notera également que cette forme sphérique peut également être montée dans un support comprenant plusieurs bras de maintien venant serrer entre eux la balle, les bras étant solidaires d'une embase que l'on peut fixer dans une pièce. Un système mécanique peut alors être prévu pour orienter la balle dans une direction désirée. Ce dernier cas peut être tout particulièrement intéressant si un imageur est intégré dans l'enceinte de la balle.

Enfin, avantageusement, les systèmes source-filtres-récepteurs peuvent être réalisés collectivement, ce qui limite leur coût de fabrication.

## Revendications

1. Détecteur de gaz comprenant :
un ensemble de deux calottes hémisphériques (1-1, 1-2) dont les concavités sont en regard et sont réflectrices au moins sur une partie de leurs faces en regard, et
une plaquette (11) disposée dans un plan équatorial de l'ensemble des deux calottes, au voisinage mais à l'écart du centre de ce plan équatorial et par rapport au centre de la structure sphérique des deux calottes hémisphériques, comprenant dos à dos :
- un générateur de lumière divergent (AB) tourné vers la première calotte (1-1), et
- un détecteur de lumière (CD) tourné vers la deuxième calotte (1-2) .

2. Détecteur selon la revendication 1, dans lequel les deux calottes hémisphériques (1-1, 1-2) sont assemblées en une sphère.

3. Détecteur selon la revendication 1, dans lequel les deux calottes hémisphériques sont écartées l'une de l'autre par une bague annulaire (3).

4. Détecteur selon la revendication 1, dans lequel le détecteur de lumière (CD) comprend au moins deux parties détectant des longueurs d'onde différentes.

5. Détecteur selon l'une quelconque des revendications 1 à 4, dans lequel la plaquette (11) repose sur une languette (40) en appui sur au moins un bord desdites calottes, ladite languette étant située dans ledit plan équatorial des calottes.

6. Détecteur selon la revendication 5, dans lequel la languette (40) est en un matériau transparent aux longueurs d'onde que le détecteur de gaz vise à détecter.

7. Détecteur selon l'une quelconque des revendications 1 à 6, dans lequel le générateur et le détecteur de lumière sont formés dans des parties de plaques accolées par leur face arrière.

8. Détecteur selon l'une quelconque des revendications 1 à 7, dans lequel la partie réflectrice des deux calottes hémisphériques (1-1, 1-2) est située à une latitude supérieure à 60° par rapport audit plan équatorial.

9. Détecteur selon l'une quelconque des revendications 1 à 8, dans lequel l'ensemble générateur-détecteur (AB, CD) est placé à une distance du centre du plan équatorial comprise entre 5 et 10 % du rayon des calottes hémisphériques (1-1, 1-2).

10. Détecteur imageur, comprenant un détecteur de gaz selon la revendication 5 ou l'une quelconque des revendications 6 à 8 dans leur rattachement à la revendication 5, un imageur étant en outre formé sur ladite languette (40).

11. Détecteur imageur selon la revendication 10, dans lequel l'imageur est un imageur infrarouge.

12. Détecteur imageur selon la revendication 10 ou 11, comprenant en outre plusieurs bras de maintien venant serrer les calottes hémisphériques (1-1, 1-2) et assurant l'orientation desdites calottes.

## Patentansprüche

1. Gasdetektor, der Folgendes aufweist:
eine Anordnung von zwei halbkugelförmigen Kappen (1-1, 1-2), die gegenüberliegenden Konkavitäten aufweisen und die auf mindestens einem Teil ihrer gegenüberliegenden Oberflächen reflektierend sind, und
eine Platte (11), die in einer Äquatorialebene der Anordnung der beiden Kappen in der Nähe des Zentrums der Äquatorialebene, jedoch in einem Abstand von diesem und in Bezug auf das Zentrum der kugelförmigen Struktur der beiden halbkugelförmigen Kappen angeordnet ist und der, Rücken an Rücken, Folgendes aufweist
- einen Generator für divergierendes Licht (AB), der auf die erste Kappe (1-1) gerichtet ist, und
- einen Lichtdetektor (CD), der auf die zweite Kappe (1-2) gerichtet ist.

2. Detektor nach Anspruch 1, wobei die beiden halbkugelförmigen Kappen (1-1, 1-2) zu einer Kugel zusammengesetzt sind.

3. Detektor nach Anspruch 1, wobei die beiden halbkugelförmigen Kappen durch einen Ring (3) voneinander beabstandet sind.

4. Detektor nach Anspruch 1, wobei der Lichtdetektor (CD) mindestens zwei Abschnitte aufweist, die unterschiedliche Wellenlängen erfassen.

5. Detektor nach einem der Ansprüche 1 bis 4, wobei die Platte (11) von einer Lasche (40) getragen wird, die auf mindestens einer Kante der Kappen aufliegt, wobei die Lasche in der Äquatorialebene der Kappen angeordnet ist.

6. Detektor nach Anspruch 5, wobei die Lasche (40) aus einem Material besteht, das für die Wellenlängen, die der Gasdetektor erfassen soll, transparent ist.

7. Detektor nach einem der Ansprüche 1 bis 6, wobei der Lichtgenerator und der Detektor in Plattenabschnitten ausgebildet sind, deren Rückseiten aneinander liegen.

8. Detektor nach einem der Ansprüche 1 bis 7, bei dem sich der reflektierende Teil der beiden halbkugelförmigen Kappen (1-1, 1-2) auf einer Breite von mehr als 60° in Bezug auf die Äquatorialebene befindet.

9. Detektor nach einem der Ansprüche 1 bis 8, wobei die Generator-DetektorAnordnung (AB, CD) in einem Abstand von der Mitte der Äquatorialebene angeordnet ist, der zwischen 5 und 10 % des Radius der Halbkugelkappen (1-1, 1-2) liegt.

10. Bildgeberdetektor, aufweisend den Gasdetektor nach Anspruch 5 oder nach einem der Ansprüche 6 bis 8 in ihrer Abhängigkeit von Anspruch 5, wobei auf der Lasche (40) ferner ein Bildgeber ausgebildet ist.

11. Bildgeberdetektor nach Anspruch 10, wobei der Bildgeber ein Infrarotbildgeber ist.

12. Bildgeberdetektor nach Anspruch 10 oder 11, der ferner mehrere Tragarme aufweist, die die halbkugelförmigen Kappen (1-1, 1-2) einklemmen und die Ausrichtung der Kappen sicherstellen.

## Claims

1. A gas detector comprising:
an assembly of two hemispherical caps (1-1, 1-2) having opposite concavities, and which are reflective on at least a portion of their opposite surfaces, and
a plate (11) arranged in an equatorial plane of the assembly of the two caps, in the vicinity of but spaced apart from the center of said equatorial plane and with respect to the center of the spherical structure of the two hemispheric caps, comprising, back-to-back:
- a diverging light generator (AB) directed towards the first cap (1-1), and
- a light detector (CD) directed towards the second cap (1-2).

2. The detector of claim 1, wherein the two hemispherical caps (1-1, 1-2) are assembled in a sphere.

3. The detector of claim 1, wherein the two hemispherical caps are spaced apart from each other by a ring (3).

4. The detector of claim 1, wherein the light detector (CD) comprises at least two portions detecting different wavelengths.

5. The detector of any of claims 1 to 4, wherein the wafer (11) is supported by a tab (40) bearing on at least one edge of said caps, said tab being located in said equatorial plane of the caps.

6. The detector of claim 5, wherein the tab (40) is made of a material transparent to the wavelengths that the gas detector aims at detecting.

7. The detector of any of claims 1 to 6, wherein the light generator and detector are formed in plate portions having their rear surfaces placed against each other.

8. The detector of any of claims 1 to 7, wherein the reflective portion of the two hemispherical caps (1-1, 1-2) is located at a latitude greater 60° with respect to said equatorial plane.

9. The detector of any of claims 1 to 8, wherein the generator-detector assembly (AB, CD) is placed at a distance from the center of the equatorial plane ranging between 5 and 10% of the radius of the hemispherical caps (1-1, 1-2).

10. An imager detector, comprising the gas detector of claim 5 or of any of claims 6 to 8 in their dependency on claim 5, an imager being further formed on said tab (40).

11. The imager detector of claim 10, wherein the imager is an infrared imager.

12. The imager detector of claim 10 or 11, further comprising several support arms clamping the hemispherical caps (1-1, 1-2) and directing said caps.
